# EUROPÄISCHE PATENTSCHRIFT

(11) **EP 1 883 838 B1**
(45) Veröffentlichungstag und Bekanntmachung des Hinweises auf die Patenterteilung: **15.05.2013**
(21) Anmeldenummer: 06725291.6
(22) Anmeldetag: 23.03.2006
(51) Int. Cl.: G01S 15/93, G01S 7/539, G01S 7/41, G01S 7/48

(54) **VERFAHREN UND VORRICHTUNG ZUR ERKENNUNG DER OBERFLÄCHENBESCHAFFENHEIT VON OBJEKTEN DES STRAßENVERKEHRS ODER PERSONEN**
METHOD AND DEVICE FOR RECOGNIZING THE SURFACE CHARACTERISTICS OF TRAFFIC OBJECTS OR INDIVIDUALS
PROCEDE ET DISPOSITIF POUR RECONNAITRE LA NATURE DE LA SURFACE D'OBJETS DE LA CIRCULATION ROUTIERE OU DE PERSONNES

(30) Priorität: 09.05.2005 DE 102005021225
(43) Veröffentlichungstag der Anmeldung: 06.02.2008
(73) Patentinhaber: ROBERT BOSCH GMBH, 70442 Stuttgart (DE)
(72) Erfinder: ZOTT, Christian, 74321 Bietigheim-Bissingen (DE); CARSTENS-BEHRENS, Soenke, 70839 Gerlingen (DE); ZEHDER, Claudia, 72793 Pfullingen (DE); KAMINSKI, Jacek, 70839 Gerlingen (DE)
(86) Internationale Anmeldenummer: PCT/EP2006/061015
(87) Internationale Veröffentlichungsnummer: WO 2006/120057

(56) Entgegenhaltungen:
- DE-A1- 10 025 678
- DE-A1- 10 116 277
- DE-A1- 10 260 434
- DE-A1- 10 334 699
- DE-A1- 10 344 299
- DE-A1- 19 801 617
- DE-B3- 10 327 115
- US-A1- 2004 140 927

## Beschreibung

Die Erfindung betrifft ein Verfahren und eine Vorrichtung zur Erkennung der Oberflächenbeschaffenheit von Objekten des Straßenverkehrs oder Personen nach den Oberbegriffen der unabhängigen Ansprüche 1 und 5 sowie die Verwendung eines solchen Verfahrens in Fahrzeugen gemäß Anspruch 4.

Die Erhöhung der Sicherheit im Straßenverkehr bildet einen Schwerpunkt der Entwicklung heutiger und zukünftiger Fahrzeugsysteme. Dabei geht es neben der Erhöhung der Sicherheit der Fahrzeuginsassen auch um die Erhöhung der Sicherheit anderer Verkehrsteilnehmer, insbesondere von Fußgängern oder Radfahrern im Straßenverkehr. In zukünftigen Gesetzesvorhaben wird daher der Schutz von Fußgängern und Fahrrädern im Straßenverkehr besondere Berücksichtigung finden.

### Stand der Technik

Aus dem Stand der Technik bekannt sind Sensoren und Auswerteeinrichtungen, welche den Aufprall von Objekten auf ein Fahrzeug registrieren und die Auslösung von Airbags zum Schutz der Fahrzeuginsassen steuern. Derartige Sensoren erfassen eine Verformung oder auch eine sehr hohe Beschleunigung der Front- oder Seitenteile eines Fahrzeuges. Nachteilig bei derartigen Einrichtungen ist es, daß eine Unterscheidung zwischen Personen und Objekten, also beispielsweise Fahrzeugen, Hindernissen oder dergleichen schwierig ist. Nachteilig hierbei ist auch, daß die Erfassung und Klassifizierung von Personen oder Objekten erst sehr spät erfolgt, so daß unter Umständen nicht genügend Zeit zur Einleitung von Schutzmaßnahmen zur Verfügung steht.

Aus dem Stand der Technik sind des weiteren sogenannte Precrash-Erkennungssysteme zur Erkennung von Verkehrsteilnehmern und Hindernissen bekannt. Die DE 100 25 678 A1 offenbart beispielsweise ein Verfahren und eine Vorrichtung zur Detektion von Verkehrsteilnehmern und Hindernissen auf der Grundlage von Kamerabildern zur Bestimmung deren Entfernung vom Beobachter und zu deren Klassifikation. Hierbei werden in einer zweistufigen Klassifikation potentielle Unfallgegner erkannt und identifiziert. Es wird die Entfernung und die Geschwindigkeit des potentiellen Unfallgegners geschätzt und auf dieser Basis eine Klassifikation der Verkehrsteilnehmer vorgenommen.

Aus der DE 102 60 434 A1 ist ein Verfahren bekannt geworden, welches eine Längenmessung von Objekten vor einem Fahrzeug mit Hilfe von Radarsensoren vornimmt. Auf der Basis dieser Längenmessung erfolgt eine Klassifikation der Objekte und daraus beispielsweise eine Schätzung der Masse der Objekte.

Kamerabasierte oder radarsensorbasierte Sensorsysteme erfordern eine aufwendige Realisierung und damit verbundene hohe Kosten.

Aus der DE 198 01 617 A1 ist ein Radarsignal-Verarbeitungsverfahren bekannt, welches aus dem zeitlichen Verlauf der Intensitätsmodulation über der Objektentfernung eine Aussage über die Höhe des Objekts über der reflektierenden Fläche ableitet.

Bekannt sind ferner sogenannte Einparkhilfen, welche mittels einer Ultraschall-Sensorik die Distanz zwischen einem Fahrzeug und einem Hindernis bestimmen und bei Unterschreiten einer vorgebbaren Schwelle Warnsignale an den Fahrer des Fahrzeugs ausgeben.

Aufgabe der vorliegenden Erfindung ist es, ein Verfahren und eine Vorrichtung zur Erkennung der Oberflächenbeschaffenheit von Objekten des Straßenverkehrs oder Personen zu vermitteln, welches auf einfache und kostengünstige Weise durchführbar und realisierbar ist.

### Vorteile der Erfindung

Diese Aufgabe wird durch die Merkmale der unabhängigen Ansprüche 1, 4 und 5 gelöst.

Grundidee der Erfindung ist es, aus der Kenntnis der Beschaffenheit der Oberfläche eines Objekts des Straßenverkehrs oder einer Person eine Klassifikation des Objekts oder dieser Person durchzuführen und auf diese Weise beispielsweise Personen von Gegenständen zu unterscheiden. Hierzu werden erfingdungsgemäß Sendepulse von dem Fahrzeug ausgesandt, an der Person oder dem Objekt reflektiert, die Charakteristika der empfangenen Echopulse ausgewertet und hieraus auf die Oberflächenbeschaffenheit des Objekts oder der Person geschlossen.

Vorteilhafte Ausgestaltungen und Weiterbildungen der Erfindung sind Gegenstand der auf die unabhängigen Ansprüche rückbezogenen Unteransprüche.

So werden vorzugsweise folgende Signalcharakteristika ausgewertet und auf dieser Basis die Klassifizierung vorgenommen:
- Pulslänge eines empfangenen Echopulses;
- Mittlere Pulslänge einer vorgebbaren Anzahl vorausgegangener Echopulse derselben Person oder desselben Objekts;
- Fluktuation der Pulslänge einer vorgebbaren Anzahl vorausgegangener Echopulse derselben Person oder desselben Objekts;
- Anzahl der Echopulse innerhalb eines vorgebbaren Zeitintervalls beginnend vom ersten empfangenen Echopuls;
- Veränderung der Signalform in Abhängigkeit vom jeweiligen Abstand der Person oder des Objekts vom Fahrzeug.

Zur Auswertung kommen dabei unterschiedliche Algorithmen in Frage. Beispielsweise werden die einzelnen Merkmale getrennt als Klassifikatoren verwendet und ihre Ergebnisse logisch verknüpft. Darüber hinaus können auch LDA-Verfahren, neuronale Netze, Support Vector Machines (SVM) oder dergleichen eingesetzt werden.

Besonders vorteilhaft können hierbei Ultraschallsignale eingesetzt werden. In diesem Falle können Puls-Echo-Sensoren verwendet werden, die beispielsweise Teil eines Ultraschallsensor-Arrays sind, wie es bei an sich bekannten Einparkhilfen verwendet wird.

### Zeichnung

Weitere Vorteile und Merkmale der Erfindung sind Gegenstand der nachfolgenden Beschreibung sowie der zeichnerischen Darstellung eines Ausführungsbeispiels der Erfindung.

In der Zeichnung zeigen:
Fig. 1 schematisch ein Signal eines Ultraschallsensors mit Sendepuls und Empfangspuls einer sogenannten Einparkhilfe;
Fig.2 eine Folge von vier Scans, wobei ein Objekt mit einfacher Oberfläche, beispielsweise ein Leitpfosten im Sichtbereich eines Puls-Echo-Sensors angeordnet ist;
Fig. 3 eine Folge von vier Scans, wobei eine Person im Sichtbereich des Puls-Echo-Sensors angeordnet ist und
Fig. 4 schematisch eine in einem Fahrzeug angeordnete Vorrichtung zur Bestimmung der Oberflächenbeschaffenheit von Personen oder Objekten des Straßenverkehrs.

### Beschreibung von Ausführungsbeispielen

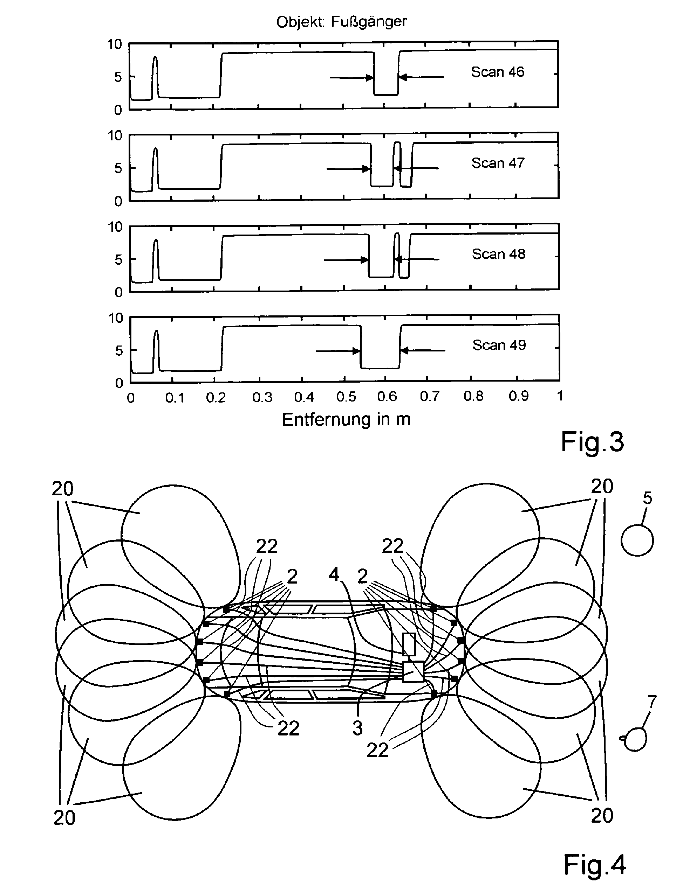

Eine in Fig. 4 dargestellte Vorrichtung zur Erkennung der Oberflächenbeschaffenheit von Objekten oder Personen des Straßenverkehrs, beispielsweise eines Fußgängers 7 oder eines Leitpfostens 5, die im Frontbereich eines Fahrzeugs 1 angeordnet sind, umfaßt einen oder mehrere Puls-Echo-Sensoren 2, insbesondere jeweils ein im Frontbereich und im Heckbereich des Fahrzeugs 1 angeordnetes Sensor-Array. Die Puls-Echo-Sensoren 2 senden Ultraschallsignale 20 in Form von Sendepulsen aus. Diese Sendepulse werden beispielsweise von der Person 7 oder dem Leitpfosten 5 reflektiert und im Fahrzeug von den Puls-Echo-Sensoren 2 empfangen. Die Sensoren 2 sind über Signalleitungen 22 mit einer Signalanalyseeinrichtung 3 verbunden, welche die empfangenen Signale auswertet und abhängig von der Auswertung wenigstens eine Steuereinrichtung 4 des Fahrzeugs 1, zum Beispiel zur Einstellung und Anpassung der Fahrdynamik des Fahrzeugs 1 und/oder zur Ansteuerung von Schutzeinrichtungen, insbesondere Insassenschutzeinrichtungen oder Fußgängerschutzeinrichungen des Fahrzeugs 1 ansteuert.

Als Sensor-Arrays können beispielsweise die von Einparkhilfen bekannten Ultraschallsensor-Arrays verwendet werden, die die Entfernung eines Objekts 5 zum Fahrzeug ermitteln, um so dem Fahrer Warnhinweise zur Vermeidung von Kollisionen mit dem Objekt 5 zu geben.

Gemäß der vorliegenden Erfindung werden diese Ultraschallsensoren 2 nun zur Erkennung der Oberflächenbeschaffenheit einer sich vor dem Fahrzeug befindlichen Person 7 oder eines Objekts, beispielsweise des Leitpfostens 5 eingesetzt.

Derartige Ultraschallsensoren weisen zwei Pegel (high, low) auf. Ein Wechsel von high nach low zeigt beispielsweise den Beginn eines empfangenen Pulses an, der anschließende Wechsel von low nach high dessen Ende. Die Zeit, während der der Pegel auf low liegt, kann als Pulsdauer gemessen werden. Aus der Laufzeitmessung vom Senden bis zum Empfangen wird bei einer an sich bekannten Einparkhilfe der Abstand des Fahrzeugs zum Objekt bestimmt.

Die vorliegende Erfindung nutzt nun die Signalcharakterisika derartiger Echopulse aus, um hieraus Rückschlüsse auf die Oberflächenbeschaffenheit einer Person 7 oder eines Objekts 5, welche sich im Einflußbereich der Sensoren 2 des Fahrzeugs befinden, zu ziehen. Zur Klassifizierung werden dabei Merkmale herangezogen, die aus dem Sensorsignal gewonnen werden. Diese sind:
- die Pulslänge eines aktuellen Echosignals;
- die mittlere Pulslänge einer vorgegebenen Anzahl vorausgegangener Echosignale derselben Person 7 oder desselben Objekts 5;
- die Fluktuation der Pulslänge einer vogegebenen Anzahl vorausgehender Echosignale derselben Person 7 oder desselben Objekts 5, wobei hier insbesondere die Varianz und/oder die Standardabweichung in Frage kommen;
- die Anzahl der Pulse innerhalb eines vorgegebenen Intervalls vom ersten Echo der Person 7 oder des Objekts 5 an gerechnet;
- die Abhängigkeit der vorausgegangenen Merkmale vom jeweiligen Abstand der Person 7 oder des Objekts 5 zum Sensor sowie
- die Fluktuation, die sich bei einem Tracking der Abstandsdaten der Person 7 oder des Objekts 5 ergeben.

Zur Klassifizierung können verschiedene Algorithmen eingesetzt werden. Im einfachsten Fall werden die einzelnen Merkmale getrennt als Klassifikatoren verwendet und ihre Ergebnisse logisch, beispielsweise durch UND/ODER-Glieder, verknüpft. Alternativ dazu können auch LDA-Verfahren, neuronale Netze oder SVM eingesetzt werden. Abhängig von der auf diese Weise erkannten Oberflächenbeschaffenheit können Fahrdynamik-Systeme des Fahrzeugs 1 eingestellt oder angepaßt und/oder Schutzeinrichtungen der Fahrzeuginsassen oder auch beispielsweise Fußgängerschutzeinrichtungen angesteuert werden. So kann beispielsweise bei Erkennen einer Person 7 im Bereich des Fahrzeugs 1 ein Außenairbag gezündet werden.

Nachfolgend wird das erfindungsgemäße Verfahren und dessen Verwendung in Kraftfahrzeugen 1 anhand des Signalverhaltens von Ultraschallsensoren, wie sie bei Einparkhilfen zum Einsatz kommen, näher erläutert.

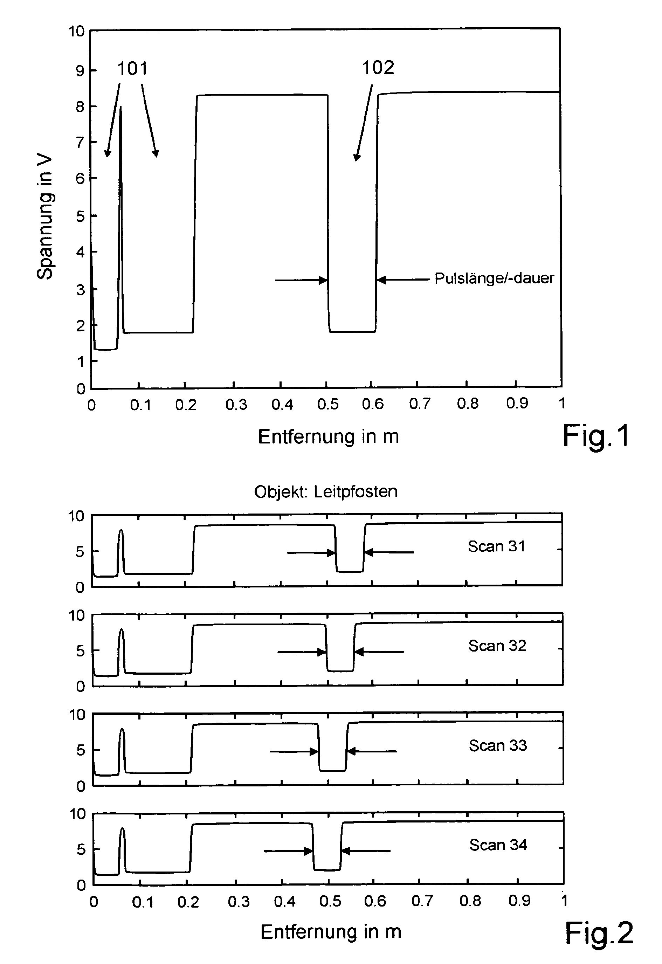

In Fig. 1 sind ein Sendepuls 101 mit Ausschwingphase sowie ein Echopuls 102 dargestellt. Dabei ist die Spannung der von einem Ultraschallsensor 2 ausgegebenen Signale über der Entfernung dargestellt. Aus der Echolaufzeit kann auf an sich bekannte Weise - wie bei Einparkhilfen üblich - der Abstand des Fahrzeugs 1 zu der Person 7 oder dem Objekt 5 bestimmt werden.

Fig. 2 stellte eine Folge von vier Scans (Scan 31 bis 34) dar, wobei vor dem Fahrzeug 1 ein Objekt mit einfacher Oberfläche, beispielsweise ein Leitpfosten im Sichtbereich der Sensoren 2 angeordnet ist. Wie die Scans zeigen, variiert die Pulslänge kaum. Die Zahl der Pulse ist konstant = 1. Aus diesen Signalcharakteristika kann darauf geschlossen werden, daß das erfaßte Objekt eine einfache Oberfläche aufweist, beispielsweise zylinderförmig, kugelförmig, ellipsoidförmig oder dergleichen ausgebildet ist. Hieraus wiederum kann eine Klassifizierung des Objekts 5 zur Unterscheidung von einer Person vorgenommen werden.

Demgegenüber ist bei den in Fig. 3 dargestellten vier Scans (Scans 46 bis 49) vor dem Fahrzeug eine Person 7, beispielsweise ein Fußgänger angeordnet, der naturgemäß eine komplexe "Oberfläche" aufweist. Den dargestellten Scans 46 bis 49 lagen hierbei die gleichen Randbedingungen, insbesondere die gleiche Wiederholrate wie bei den in Fig. 2 dargestellten Scans 31 bis 34 zugrunde. Die Pulslängen sowie die Anzahl der Pulse variieren bei diesen Scans in kurzer Zeit erheblich. Aus diesen Signalcharakteristika wird auf eine komplexe Oberfläche geschlossen, wie sie beispielsweise bei einer Person existiert. Das "Objekt" vor den Sensoren 2 wird daher als Person 7 klassifiziert. Eine komplexe Oberfläche erzeugt nämlich schon bei geringsten relativen Bewegungen zu den Sensoren 2 starke Abweichungen von Echopuls zu Echopuls. Dabei kann eine komplexe Oberfläche aus einigen oder vielen kleinen Facetten mit jeweils kleinem Rückstreuquerschnitt oder aus einer Vielzahl von Mikroreflektoren, die jeweils einen vernachlässigbaren kleinen Rückstreuquerschnitt aufweisen, zusammengesetzt sein, aber auch aus einer Kombination beider.

Die Erfindung nutzt die Korrelation zwischen der Oberflächenrauhigkeit und dem Rückstreuverhalten. Sie wertet die stochastischen Fluktuationen der reflektierten Echopulse aus und nimmt auf diese Weise eine Klassifikation des Reflektortyps für jede Laufzeit-/Entfernungsmessung der Strecke Sensor-Reflektor-Empfänger vor, in einem Sensor-Array also jeweils separat für jedes Auto- und Kreuzecho.

Vorteilhaft hierbei ist die sehr kostengünstige Ausführung mittels Ultraschallsensorik. Auch die Auswertung der Pulse ist nur mit verhältnismäßig geringem technischen Aufwand zu realisieren. Darüber hinaus können Aussagen über den Reflektortyp für jede Puls-Echo-Abstandsmessung je Tripel Sender-Reflektor-Empfänger getroffen werden.

Dies erleichtert die Zuordnung der Echos zu den in der Auswerteeinheit angelegten internen Objekten (Tracks) insbesondere für den Fall, daß sich mehr als ein Objekt oder eine Person im Erfassungsbereich der Sensoren 2 befinden.

Weiterhin erleichtert das Attribut "Reflektortyp" die Zuordnung von in der Auswerteeinheit intern angelegten Objekte verschiedener Kanäle (Kanal 1: Sensor 1 sendet, Sensor 1 empfängt, Kanal 2: Sensor 1 sendet, Sensor 2 empfängt, Kanal 3: Sensor 2 sendet, Sensor 1 empfängt, Kanal 4: Sensor 1 sendet, Sensor 3 empfängt usw.) zueinander, insbesondere für die Fusion der Daten zu 2D- oder 3D-Objekten.

## Patentansprüche

1. Verfahren zu Erkennung der Oberflächenbeschaffenheit von Objekten (5) des Straßenverkehrs oder Personen (7), insbesondere von Fußgängern, Fahrzeugen, Hindernissen und dergleichen, bei dem von einem Fahrzeug (1) eine Folge von Signalen ausgesendet wird, die von einer Person (7) oder einem Objekt (5) reflektiert wird, und bei dem die reflektierten Signale in dem Fahrzeug (1) empfangen und ausgewertet werden, **dadurch gekennzeichnet, dass** die ausgesendeten Signale Sendepulse sind, deren Echopulse empfangen werden, und dass ausgehend von den Signalcharakteristika der Echopulse auf die Oberflächenbeschaffenheit und hieraus darauf geschlossen wird, ob vor dem Fahrzeug (1) eine Person (7) oder ein Objekt (5) positioniert ist, wobei als Signalcharakteristika die Veränderung der Signalform in Abhängigkeit vom jeweiligen Abstand der Person (7) oder des Objekts in (5) vom Fahrzeug (1) herangezogen wird, und wobei auf die Oberflächenbeschaffenheit aufgrund eines oder mehrerer der folgenden Signalcharakteristika geschlossen wird:
- Fluktuation der Pulslänge einer vorgebbaren Anzahl vorausgegangener Echopulse derselben Person (7) oder desselben Objekts (5);
- Anzahl der Echopulse innerhalb eines vorgebbaren Zeitintervalls, beginnend vom ersten empfangenen Echopuls.

2. Verfahren nach Anspruch 1, **dadurch gekennzeichnet, dass** auf die Oberflächenbeschaffenheit zusätzlich aufgrund einer oder mehrerer der folgenden Signalcharakteristika geschlossen wird:
- Pulslänge eines empfangenen Echopulses;
- mittlere Pulslänge einer vorgebbaren Anzahl vorausgegangener Echopulse derselben Person (7) oder desselben Objekts (5).

3. Verfahren nach Anspruch 1 oder 2, **dadurch gekennzeichnet, daß** die Signale Ultraschallsignale sind.

4. Verwendung eines Verfahrens nach einem der Ansprüche 1 bis 3 zur Einstellung und Anpassung der Fahrdynamik des Fahrzeugs (1) und/oder zur Ansteuerung von Schutzeinrichtungen, insbesondere Insassenschutzeinrichtungen oder Fußgängerschutzeinrichtungen.

5. Vorrichtung zur Bestimmung der Oberflächenbeschaffenheit von Objekten (5) des Straßenverkehrs, oder Personen (7) vor einem Fahrzeug (1), insbesondere Fußgängern, Fahrzeugen, Hindernissen und dergleichen, umfassend eine Folge von Signalen aussendende und empfangende Puls-Echo-Sensoren (2), wenigstens eines Signalanalyseeinrichtung (3) zur Bestimmung und Auswertung der Signalcharakteristika der an der Person (7) oder dem Objekt (5) reflektierten Echopulse und wenigstens einer Steuereinrichtung (4) zur Ansteuerung von Fahrdynamiksystemen und/oder Schutzeinrichtungen, insbesondere Insassen- oder Fußgängerschutzeinrichtungen in Abhängigkeit von den Signalcharakteristiken, wobei als Signalcharakteristikum die Veränderung der Signalform in Abhängigkeit vom jeweiligen Abstand der Person (7) oder des Objekts (5) vom Fahrzeug (1) bestimmt und ausgewertet wird, und wobei auf die Oberflächenbeschaffenheit aufgrund eines oder mehrerer der folgenden Signalcharakteristika geschlossen wird:
- Fluktuation der Pulslänge einer vorgebbaren Anzahl vorausgegangener Echopulse derselben Person (7) oder desselben Objekts (5);
- Anzahl der Echopulse innerhalb eines vorgebbaren Zeitintervalls, beginnend vom ersten empfangenen Echopuls.

6. Vorrichtung nach Anspruch 5, **dadurch gekennzeichnet, daß** die Puls-Echo-Sensoren Ultraschallsensoren (2) sind.

7. Vorrichtung nach Anspruch 6, **dadurch gekennzeichnet, daß** die Ultraschallsensoren (2) Teil eines Ultraschallsensor-Arrays eines Abstandswarnsystems, insbesondere einer Einparkhilfe eines Fahrzeugs (1) sind.

## Claims

1. Method for detecting the surface characteristics of objects (5) in road traffic or persons (7), in particular pedestrians, vehicles, obstacles and the like, in which a vehicle (1) emits a sequence of signals which are reflected by a person (7) or an object (5), and in which the reflected signals are received and evaluated in the vehicle (1), **characterized in that** the emitted signals are transmission pulses whose echo pulses are received, and **in that** the surface characteristics are determined on the basis of the signal characteristics of the echo pulses, and on the basis of said surface characteristics it is determined whether a person (7) or an object (5) is positioned in front of the vehicle (1), wherein the change in the signal shape as a function of the respective distance between the person (7) or the object (5) and the vehicle (1) is used as the signal characteristics, and wherein the surface characteristics are determined on the basis of one or more of the signal characteristics:
- fluctuation in the pulse length of a predefined number of preceding echo pulses of the same person (7) or the same object (5);
- number of the echo pulses within a predefineable time interval, starting from the first received echo pulse.

2. Method according to Claim 1, **characterized in that** the surface characteristics are additionally determined on the basis of one or more of the following signal characteristics:
- pulse length of a received echo pulse;
- average pulse length of a predefinable number of preceding echo pulses of the same person (7) or the same object (5).

3. Method according to Claim 1 or 2, **characterized in that** the signals are ultrasound signals.

4. Use of a method according to one of Claims 1 to 3 for setting and adapting movement dynamics of the vehicle (1) and/or for actuating protection devices, in particular vehicle occupant protection devices or pedestrian protection devices.

5. Device for determining the surface characteristics of objects (5) in road traffic, or persons (7) in front of a vehicle (1), in particular pedestrians, vehicles, obstacles and the like, comprising pulse echo sensors (2) which emit and receive a sequence of signals, at least one signal analysis device (3) for determining and evaluating the signal characteristics of the echo pulses reflected at the person (7) or the object (5) and at least one control device (4) for actuating vehicle movement dynamic systems and/or protection devices, in particular vehicle occupant or pedestrian protection devices as a function of the signal characteristics, wherein the change in the signal shape is determined as a function of the respective distance between the person (7) or the object (5) and the vehicle (1) and is evaluated as a signal characteristic, and wherein the surface characteristics are determined on the basis of one or more of the following signal characteristics:
- fluctuation in the pulse length of a predefinable number of preceding echo pulses of the same person (7) or the same object (5);
- number of echo pulses within a predefinable time interval, starting from the first received echo pulse.

6. Device according to Claim 5, **characterized in that** the pulse echo sensors are ultrasound sensors (2).

7. Device according to Claim 6, **characterized in that** the ultrasound sensors (2) are part of an ultrasound sensor array of a distance warning system, in particular of a parking assistant of a vehicle (1).

## Revendications

1. Procédé de détection de la nature de la surface d'objets (5) du trafic routier ou de personnes (7), en particulier de piétons, de véhicules, d'obstacles et similaires, dans lequel une succession de signaux est émise par un véhicule (1) et est réfléchi par une personne (7) ou un objet (5) et dans lequel les signaux réfléchis sont reçus et évalués dans le véhicule (1), **caractérisé en ce que**
les signaux émis sont des impulsions d'émission dont les impulsions d'écho sont reçues,
**en ce que** partant des caractéristiques des signaux d'impulsions d'écho, des conclusions sont tirées sur la nature de la surface et de là, il est vérifié si une personne (7) ou un objet (5) sont présents en avant du véhicule (1),
les caractéristiques des signaux utilisées étant la modification de la forme du signal en fonction de la distance entre la personne (7) ou l'objet (5) par rapport au véhicule (1),
les conclusions concernant la nature de la surface étant tirées sur la base d'une ou plusieurs des caractéristiques suivantes des signaux :
- fluctuation de la longueur d'un nombre prédéterminé d'impulsions d'écho précédentes par la même personne (7) ou le même objet (5) et
- le nombre des impulsions d'écho à l'intérieur d'un intervalle de temps prédéterminé qui commence à la première impulsion d'écho reçue.

2. Procédé selon la revendication 1, **caractérisé en ce que** des conclusions sur la nature de la surface sont en outre tirées sur la base d'une ou plusieurs des caractéristiques suivantes des signaux :
- longueur d'une impulsion d'écho reçue et
- longueur moyenne d'un nombre prédéterminé d'impulsions d'écho précédentes provenant de la même personne (7) ou du même objet (5).

3. Procédé selon les revendications 1 ou 2, **caractérisé en ce que** les signaux sont des signaux d'ultrasons.

4. Utilisation d'un procédé selon l'une des revendications 1 à 3 pour régler et adapter la dynamique de roulage du véhicule (1) et/ou pour commander des dispositifs de protection, en particulier des dispositifs de protection des passagers ou des dispositifs de protection des piétons.

5. Dispositif de détermination de la nature de la surface d'objets (5) du trafic routier ou de personnes (7) situées en avant d'un véhicule (1), en particulier de piétons, de véhicules, d'obstacles et similaires, comprenant des détecteurs (2) d'impulsions d'écho émettant et recevant une succession de signaux, au moins un dispositif (3) d'analyse des signaux qui détermine et évalue les caractéristiques des signaux des impulsions d'écho réfléchies par la personne (7) ou l'objet (5) et au moins un dispositif de commande (4) qui commande des systèmes de dynamique de roulage et/ou des dispositifs de protection, en particulier des dispositifs de protection des passagers ou des piétons en fonction des caractéristiques des signaux, la caractéristique des signaux définie et évaluée étant la modification de la forme des signaux en fonction de la distance entre la personne (7) et l'objet (5) par rapport au véhicule (1), les conclusions sur la nature de la surface étant tirées sur la base d'une ou plusieurs des caractéristiques suivantes des signaux :
fluctuation de la longueur d'un nombre prédéterminé des impulsions d'écho provenant de la même personne (7) ou du même objet (5) et
nombre des impulsions d'écho dans un intervalle de temps prédéterminé qui commence à la réception de la première impulsion d'écho.

6. Ensemble selon la revendication 5, **caractérisé en ce que** les détecteurs de pulsations d'écho sont des détecteurs (2) d'ultrasons.

7. Ensemble selon la revendication 6, **caractérisé en ce que** les détecteurs (2) d'ultrasons font partie d'une batterie de détecteurs d'ultrasons d'un système d'alerte de distance et en particulier d'un auxiliaire de stationnement d'un véhicule (1).
